# EUROPÄISCHE PATENTANMELDUNG

(11) **EP 1 482 258 A1**
(43) Veröffentlichungstag der Anmeldung: **01.12.2004**
(21) Anmeldenummer: 04011324.3
(22) Anmeldetag: 13.05.2004
(51) Int. Cl.: F25B 39/02, F28F 1/22, B21D 53/08, B23P 15/26

(54) **Rohrverdampfer sowie Verfahren und Vorrichtung für dessen Herstellung**

(30) Priorität: 31.05.2003 DE 10324769
(71) Anmelder: Lohmann GmbH & Co. KG, 56567 Neuwied (DE)
(72) Erfinder: Wiedemann, Peter, 56588 Waldbreitbach (DE); Potthoff, Peter, 33649 Bielefeld (DE)
(74) Vertreter: Flaccus, Rolf-Dieter, Dr.

(57) **Zusammenfassung**

Ein Rohrverdampfer (6) vom Typ eines Plattenverdampfers, geeignet zum Einbau in Kühl- oder Gefriergeräte, der mindestens ein für Kältemittel geeignetes Rohr (3) aus wärmeleitendem Material sowie mindestens eine mit diesem Rohr in Kontakt stehende wärmeleitende Schicht (2,4) aufweist, ist dadurch gekennzeichnet, daß das Rohr (3) zwischen einer ersten wärmeleitenden Folie (2) und einer weiteren wärmeleitenden Folie (4) liegt und mit jeder der beiden Folien (2,4) in wärmeleitendem Kontakt steht, daß beide Folien (2,4) klebend miteinander verbunden sind, und daß die genannte erste Folie (2) in der Umgebung des Rohrs (3) durch Tiefziehen in der Weise verformt ist, daß die Folie (2) zumindest über einen Teil des Rohr-Umfangs die Oberfläche des Rohrs bedeckt.

## Beschreibung

Die vorliegende Erfindung betrifft Rohrverdampfer, die zum Einbau in Kühl- oder Gefriergeräte geeignet sind, sowie Verfahren zur Herstellung solcher Rohrverdampfer. Die Erfindung betrifft ferner Vorrichtungen, welche zur Durchführung der Herstellungsverfahren geeignet sind.

Kühlaggregate von Kühl- und Gefriergeräten weisen einen Verdampfer auf, der von einem Kältemittel durchströmt wird und dessen Funktion darin besteht, dem umgebenden Kühlraum durch Verdampfung des Kältemittels Wärme zu entziehen und dadurch die Temperatur im Kühlraum herabzusetzen. Üblicherweise handelt es sich dabei um Plattenverdampfer, die im wesentlichen aus einer ebenen Blechplatte und einer damit wärmeleitend verbundenen Rohrschlange bestehen, z. B. Aluminium-Rohr auf einem Aluminium-Blech.

Häufig werden Verdampfer verwendet, die nach dem Roll-Bondoder Z-Bond-Verfahren hergestellt wurden. Sie haben einen sandwich-artigen Aufbau mit zwei Blechplatten und dazwischen liegenden Kältemittelkanälen. Bei der Herstellung von Kühlgeräten wird der Roll-Bond- oder Z-Bond-Verdampfer auf den Kühlgutbehälter aufgeklebt. Die zuletzt genannten Verfahren haben den Nachteil, daß eine Änderung des Verdampferformates (für spezielle Abmessungen von Kühlgeräten) nur unter hohem Aufwand möglich ist.

Daneben kommen in Kühlgeräten einfache, kostengünstige Rohrverdampfer zum Einsatz, die aus einem selbstklebend ausgerüsteten Blech bestehen, das in einem ersten Schritt auf den Kühlgutbehälter geklebt wird. Anschließend wird darauf ein gebogenes Rohr oder eine Rohrschlange gelegt und mit einer einseitig klebenden Folie auf dem Blech befestigt oder mit einer selbstklebenden Aluminiumfolie in relativ aufwendiger Weise umschlossen. Der Kontakt zwischen der Folie und der Rohrschlange ist meist unzureichend, wodurch die Effizienz des Wärmeaustausches beeinträchtigt wird.

Nachteilig ist dabei, daß diese Art der Herstellung mehrere manuelle Arbeitsschritte erfordert, und daß die Fertigung des Rohrverdampfers direkt auf dem Kühlgutbehälter erfolgt. Die Qualität des Verdampfers und die Häufigkeit des Auftretens von Fabrikationsfehlern sind in hohem Maße von der Arbeitsweise der ausführenden Person abhängig.

Aufgabe der vorliegenden Erfindung war es deshalb, einen Rohrverdampfer und ein Herstellungsverfahren bereitzustellen, wodurch die vorgenannten Nachteile vermieden oder zumindest reduziert werden. Insbesondere soll eine möglichst kostengünstige Herstellung ermöglicht werden, bei der auf manuelle Vorgänge weitgehend oder vollständig verzichtet wird, um Qualitätsschwankungen zu vermeiden. Es wird ein flexibles, anpassungsfähiges Herstellungsverfahren gefordert, das die Herstellung unterschiedlicher Verdampfer-Formate ohne hohen Aufwand ermöglicht.
Des weiteren soll der Rohrverdampfer beim Einbau in Kühlgeräte auf einfache Weise montierbar sein.

Überraschenderweise werden die vorstehend genannten Aufgaben durch einen Rohrverdampfer gemäß Hauptanspruch, durch Herstellungsverfahren nach Anspruch 10, sowie durch Vorrichtungen nach Anspruch 20 gelöst, und ebenso durch die in den abhängigen Ansprüchen beschriebenen Ausführungsformen.

Die Erfindung bezieht sich auf Rohrverdampfer vom Typ eines Plattenverdampfers, die zum Einbau in Kühl- oder Gefriergeräte geeignet sind, wobei der Rohrverdampfer mindestens ein für Kältemittel geeignetes Rohr aus wärmeleitendem Material sowie mindestens eine mit diesem Rohr in Kontakt stehende wärmeleitende Schicht aufweist. Dabei liegt das Rohr zwischen einer ersten wärmeleitenden Folie und einer weiteren wärmeleitenden Folie und steht mit jeder der beiden Folien in wärmeleitendem Kontakt, wobei die Folien klebend miteinander verbunden sind. Ferner ist die genannte erste Folie in der Umgebung des Rohrs durch Tiefziehen in der Weise verformt, daß diese Folie zumindest über einen Teil des Rohr-Umfangs die Oberfläche des Rohrs bedeckt.

Diese erfindungsgemäßen Rohrverdampfer sind auf einfache, maschinelle Weise herstellbar, wie weiter unten dargestellt. Der sandwich-artige Aufbau, im wesentlichen bestehend aus einer ersten wärmeleitenden Folie, mindestens einem dazwischen liegenden Rohr, und einer weiteren wärmeleitenden Folie, wird auf einfache Weise durch Verkleben der beiden Folien erhalten.
Da das Rohr von der durch Tiefziehen verformten wärmeleitenden Folie teilweise umhüllt wird, ergibt sich dadurch eine große Kontaktfläche zur Wärmeübertragung und eine Steigerung der Effizienz des Wärmeaustausches.

Vorzugsweise handelt es sich bei jeder der beiden wärmeleitenden Folien um eine Metallfolie, wobei Aluminiumfolien besonders bevorzugt werden. Die genannte erste Folie, die beim Herstellungsprozeß durch Tiefziehen verformt wird, ist vorzugsweise nicht klebend. Die genannte weitere wärmeleitende Folie, welche die Sandwich-Anordnung zur anderen Seite hin abschließt, ist vorzugsweise eine einseitig oder doppelseitig klebende Metallfolie, besonders bevorzugt eine doppelseitig klebende Aluminiumfolie.

Im letztgenannten Fall wird bevorzugt, daß die äußere klebende Oberfläche der Folie, welche zur Verklebung des Rohrverdampfers am Kühlgutbehälter bestimmt ist, mit einer ablösbaren Schutzschicht, insbesondere einem Abdeckpapier oder einer Schutzfolie, bedeckt ist. Dadurch ist die klebende Oberfläche bis zum Zeitpunkt des Einbaus in ein Kühlgerät vor Verunreinigungen bzw. vor unbeabsichtigter Verklebung geschützt.

Hierfür geeignete Materialien sind dem Fachmann bekannt, z. B. silikonisierte Polyester- (z. B. PETP) oder PVC-Folien, oder Polytetrafluorethylen-behandeltes Papier.
Die verwendeten Aluminiumfolien weisen bevorzugt eine Dicke im Bereich von 0,005 mm bis 0,3 mm auf. Die Auswahl der Dicke richtet sich unter anderem nach dem Einsatzzweck des Verdampfers, nach den Dimensionen der Rohrschlange oder dem Qualitätsanspruch an den Verdampfer.

Das Rohr des erfindungsgemäßen Rohrverdampfers ist in der Ebene des Verdampfers vorzugsweise mehrfach gebogen, insbesondere schlangenlinienförmig oder mäanderförmig. Ferner erstreckt sich die Erfindung auch auf solche Ausführungsformen, bei denen jeweils zwei oder mehrere, im wesentlichen in derselben Ebene angeordnete Rohre in einem Rohrverdampfer enthalten sind.
Als Rohre werden für Kältemittel geeignete Rohre mit guter Wärmeleitfähigkeit, bevorzugt Metallrohre, insbesondere Aluminiumrohre, verwendet, wobei der Innendurchmesser vorzugsweise 0,2 bis 5 mm beträgt, besonders bevorzugt 0,5 bis 3 mm. Üblicherweise werden Rohre mit kreisrundem Querschnitt verwendet; darüber hinaus kommen aber auch Rohre mit anderen Querschnittsformen (z. B. halbkreisförmig, elliptisch, vierkant) in Betracht.

Gemäß einer bevorzugten Ausführungsform der Erfindung ist das Rohr des Rohrverdampfers deformiert, insbesondere in der Weise, daß der Rohrquerschnitt von der Kreisform abweicht und vorzugsweise die Form eines Halbkreises hat. Durch diese Verformung des Rohrquerschnitts wird eine Vergrößerung der Kontaktfläche zwischen dem Rohr und der tiefgezogenen Folie erreicht, wodurch die Effizienz des Wärmeaustausches gesteigert wird.

Die erfindungsgemäßen Wärmeaustauscher können mit wenig Aufwand maschinell hergestellt und durch einen einfach zu bewerkstelligenden Klebvorgang, gegebenenfalls nach Abziehen der Schutzfolie, als Bauelement in den Kühlgutbehälter von Kühl- oder Gefriergeräten eingebaut werden. Sie können in verschiedenen Abmessungen hergestellt werden und eignen sich u. a. auch für den Einbau in Kombi-Geräte (Kühl-Gefrier-Kombinationsgeräte). Hierbei ist es unter Umständen erforderlich, den Verdampfer entsprechend den Gehäuse-Abmessungen des Geräts zu verbiegen oder abzuwinkeln. Folglich kann der Verdampfer wahlweise auch als gebogenes oder abgewinkeltes, plattenförmiges Bauelement gestaltet sein.

Die Erfindung umfaßt ferner Verfahren zur Herstellung von Rohrverdampfern, welche für den Einbau in Kühl- oder Gefriergeräte geeignet sind. Diese Verfahren zeichnen sich durch folgende Schritte aus:
a) Es wird eine Negativ-Form hergestellt oder bereitgestellt, deren Oberfläche eine Kontur oder mehrere Konturen aufweist, die der Kontur des Rohres des herzustellenden Verdampfers entspricht/entsprechen. Die Herstellung dieser Form kann auf eine dem Fachmann bekannte Weise erfolgen, beispielsweise aus Metall (Stahl), Holz, Kunststoff, durch Erodieren, Fräsen oder Gießen. Eine einmal hergestellte Form kann für eine Vielzahl von Herstellungszyklen verwendet werden.
b) Die Oberfläche der Negativ-Form wird sodann mit einer ersten wärmeleitenden Folie bedeckt.
c) Das Rohr wird auf die Folie aufgelegt, wobei die Konturen des Rohres entsprechend den Konturen der Negativ-Form ausgerichtet werden. Dies kann z. B. dadurch erreicht werden, daß das/die Ende(n) des Rohres an einer oder mehreren dafür bestimmten Stelle(n) der Form positioniert werden.
d) Das Rohr wird in die Kontur der Negativ-Form eingepreßt, wobei die darunter liegende Folie tiefgezogen wird. Dies kann beispielsweise mit Hilfe einer Flächen- oder Rollenpresse (Walzenpaar) erfolgen.
e) Auf das Rohr und die tiefgezogene erste Folie wird eine weitere wärmeleitende Folie aufkaschiert, wobei diese Folie klebend mit der genannten ersten Folie verbunden wird.
f) Schließlich wird der so erhaltene Rohrverdampfer aus der Negativ-Form entnommen.

Vorteilhaft ist dabei, daß dieses Herstellungsverfahren maschinell durchgeführt werden kann. Das Herstellungsverfahren ist zudem sehr kostengünstig, da keine oder nur wenige manuelle Arbeitsvorgänge erforderlich sind.
Ferner bietet das Verfahren die Möglichkeit, mit sehr geringem Aufwand - durch Wechsel der Negativ-Formen - unterschiedliche Verdampfer-Formate mittels ein- und derselben Maschine herzustellen.

Bezüglich der verwendbaren Rohr- und Folienmaterialien wird auf die obenstehenden Ausführungen verwiesen.

Nach einer bevorzugten Ausführungsform der Erfindung ist vorgesehen, daß die genannte erste Folie vor dem Auflegen des Rohres (d. h. zwischen Schritt a und b) auf der Oberfläche der Negativ-Form fixiert wird. Dies wird vorzugsweise durch Ansaugen mittels Vakuum bewerkstelligt, aber auch andere dem Fachmann bekannte Befestigungsmethoden kommen in Betracht. Um das Ansaugen zu ermöglichen, ist die Negativ-Form vorzugsweise mit hierfür geeigneten Bohrungen, Schlitzen oder Saugnäpfen versehen. Alternativ kann die Folie z. B. mittels ihrer seitlich überhängenden Ränder an der Negativ-Form vorübergehend befestigt werden. Die Befestigung muß in der Weise erfolgen, daß das Tiefziehen während des Einpressens nicht beeinträchtigt wird.

Des weiteren ist es vorteilhaft, das Rohr vor dem Einpressen (Schritt d) zu fixieren, beispielsweise durch Verklebung oder geeignete Halte- oder Klemmvorrichtungen.

Nach dem Aufkaschieren der zweiten wärmeleitenden Folie (Schritt e) werden die eventuell seitlich überstehenden Bereiche der Folie vorzugsweise automatisch durchgetrennt und entfernt.

Nach einer weiteren, bevorzugten Ausführungsform des Verfahren ist vorgesehen, daß dieses in der Weise durchgeführt wird, daß der Rohrquerschnitt beim Einpressen deformiert wird, besonders bevorzugt in der Weise, daß der Rohrquerschnitt die Form eines Halbkreises erhält (wie oben beschrieben). Eine Deformierung des Rohrs während des Einpressens läßt sich durch eine entsprechende Dimensionierung der Konturen der Negativ-Form erreichen, insbesondere dadurch, daß die Tiefe der Kontur kleiner gewählt wird als der Rohrdurchmesser.

Eine besonders vorteilhafte Ausführungsform der Erfindung sieht vor, daß sämtliche der genannten Arbeitsschritte maschinell durchgeführt werden, vorzugsweise in einem automatisierten oder programmgesteuerten Ablauf.

Die Erfindung erstreckt sich des weiteren auf Vorrichtungen oder Maschinen, welche zur Durchführung der genannten Herstellungsverfahren geeignet sind.

Eine derartige Vorrichtung weist folgende Merkmale oder Bestandteile auf:
- eine Aufnahme oder Halterung, in der eine genannte Negativ-Form vorübergehend befestigt werden kann oder dauerhaft befestigt ist;
- Mittel zum Zuführen der genannten ersten Folie und zum Auflegen dieser Folie auf die genannte Negativ-Form, sowie Mittel zum Zuschneiden der Folie;
- Mittel zum Zuführen eines genannten Rohres und zum Auflegen und Positionieren dieses Rohres auf der genannten ersten Folie und der darunter liegenden Negativ-Form;
- Mittel zum Einpressen des Rohres, vorzugsweise eine Flächen- oder Rollenpresse;
- Mittel zum Zuführen, Aufkaschieren und Durchtrennen der genannten weiteren wärmeleitenden Folie.

Zusätzlich kann die Vorrichtung mit Mitteln zum Fixieren der genannten ersten Folie auf der Negativ-Form ausgestattet sein, insbesondere mit Vakuum-Saugeinrichtungen, wie oben beschrieben. Die Vorrichtung kann ferner Mittel zum Fixieren des Rohrs vor dem Einpressen aufweisen.

Die Mittel zum Zuführen des Rohrs können mit einem Vorratsmagazin ausgestattet sein, das eine Vielzahl solcher Rohre enthält, und aus dem jeweils eines dieser Rohre maschinell entnommen und zugeführt werden kann.

Da vorgesehen ist, daß die Negativ-Form in der genannten Aufnahme lösbar befestigt ist, läßt sich die Vorrichtung in diesem Fall leicht auf die Herstellung anderer Verdampferformate umrüsten, indem die Negativ-Form gegen eine entsprechende andere Negativ-Form ausgewechselt wird.

Gemäß einer besonderen Ausführungsform ist der Vorrichtung eine Steuerungs- oder Regelungseinheit zugeordnet, die einen automatischen Ablauf der Herstellungsschritte bewirkt. Als Steuerungs- und Regeleinheit kommt auch eine Programmsteuerung in Betracht.

Die Erfindung wird nachfolgend anhand der beigefügten, schematischen Zeichnungen beispielhaft erläutert.

Fig. 1A zeigt in einer Schnitt-Darstellung (Schnittebene senkrecht zur Ebene der Rohrwindungen (3)) den ersten Abschnitt (Schritte a) bis c)) des erfindungsgemäßen Herstellungsverfahrens.

Fig. 1B zeigt in derselben Schnitt-Darstellung den Herstellungszustand nach dem Einpressen des Rohrs.

Fig. 2 zeigt einen Schnitt durch den gemäß Fig. 1A und 1B erhaltenen Rohrverdampfer (6).

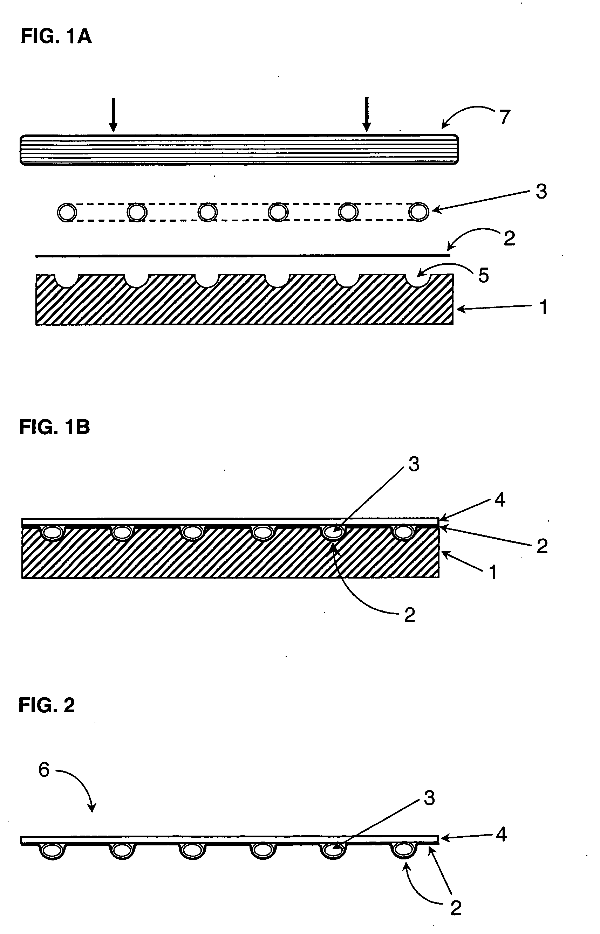

Fig. 1A zeigt eine Negativ-Form (1), deren Oberseite mit Konturen oder Vertiefungen (5) versehen wurde, die den Konturen und den Abständen der Rohrwindungen (3) entsprechen. Auf diese Negativ-Form wird eine erste, nichtklebende Aluminiumfolie (2) aufgelegt und mittels Vakuum auf der Negativ-Form fixiert (nicht gezeigt). Das gebogene Rohr bzw. die Rohrschlange (3) wird auf der Aluminiumfolie (2) positioniert, wobei der Verlauf der Rohrschlange (3) an den Konturen der Negativ-Form ausgerichtet wird. Das gebogene Rohr (3) wird in dieser Position fixiert (nicht dargestellt). Schließlich wird das gebogene Rohr (3) mittels einer Flächenpresse (7) in die Konturen (5) der Negativ-Form (1) gepreßt (Pfeilrichtung), wobei die Folie (2) im Bereich des Rohrs (3) und der Konturen (5) tiefgezogen wird.

In Fig. 1B ist zu erkennen, daß die Aluminiumfolie (2) um das in die Konturen eingepreßte Rohr (3) herum tiefgezogen ist. In einem nachfolgenden Schritt (Schritt e), s. oben) wird auf das eingepreßte Rohr (3) und die Aluminiumfolie (2) eine weitere Aluminiumfolie (4) aufkaschiert, wobei es sich um eine doppelseitig klebende Aluminiumfolie handelt. Dabei wird die erste Folie (2) in den zwischen den Rohrschlangen (3) liegenden Flächenbereichen mit der Folie (4) verklebt, so daß zwischen beiden Folien eine wärmeleitende Verbindung hergestellt ist. Außerdem steht die Aluminiumfolie (4) in Kontakt mit der Oberseite des gewundenen Rohrs (3) und ist in diesem Bereich mit dem Rohr verklebt. Die doppelseitig klebende Folie (4) ist auf der außen liegenden Oberseite mit einer ablösbaren Schutzfolie bedeckt (nicht abgebildet).

Aus Fig. 1B ist ferner ersichtlich, daß das Rohr (3) durch das Einpressen in die Form (1) von der Oberseite her flachgepreßt und deformiert wurde und deshalb einen elliptischen Querschnitt hat. Dadurch wird die Kontaktfläche mit der tiefgezogenen Folie (2), welche an dem Rohr anliegt, vergrößert.

Fig. 2: Nach dem Aufkaschieren der Folie (4) wird der Rohrverdampfer (6) aus der Form (1) herausgenommen und ist nun zum Einbau in ein Kühl- oder Gefriergerät geeignet. Der abgebildete Rohrverdampfer (6) hat einen sandwich-artigen Aufbau, der im wesentlichen aus einem gebogenen Rohr (3), einer ersten, nicht klebenden Aluminiumfolie (2) und einer zweiten, doppelseitig klebenden Aluminiumfolie (4) besteht, wobei die beiden Folien klebend miteinander verbunden sind. Die erste Aluminiumfolie (2) ist im Bereich der Rohrschlangen (3) durch Tiefziehen verformt und bedeckt die Rohroberfläche über einen Teil des Rohr-Umfangs.
Die Rohr-Querschnitte des gebogenen Rohres (3) sind flachgedrückt und haben die Form einer flach liegenden Ellipse (d. h. die große Achse der Ellipse verläuft im wesentlichen parallel zur Oberfläche des Rohrverdampfers).

Die erfindungsgemäßen Rohrverdampfer sind insbesondere für den Einbau in Kühl- oder Gefriergeräte geeignet. Darüber hinaus können sie auch als Wärmeaustauscher in anderen Geräten verwendet werden.

## Patentansprüche

1. Rohrverdampfer (6) vom Typ eines Plattenverdampfers, geeignet zum Einbau in Kühl- oder Gefriergeräte, wobei der Rohrverdampfer mindestens ein für Kältemittel geeignetes Rohr (3) aus wärmeleitendem Material sowie mindestens eine mit diesem Rohr in Kontakt stehende wärmeleitende Schicht (2,4) aufweist, **dadurch gekennzeichnet, daß**
- das Rohr (3) zwischen einer ersten wärmeleitenden Folie (2) und einer weiteren wärmeleitenden Folie (4) liegt und mit jeder der beiden Folien (2,4) in wärmeleitendem Kontakt steht,
- beide Folien (2,4) klebend miteinander verbunden sind, und
- die genannte erste Folie (2) in der Umgebung des Rohrs (3) durch Tiefziehen in der Weise verformt ist, daß die Folie (2) zumindest über einen Teil des Rohr-Umfangs die Oberfläche des Rohrs bedeckt.

2. Rohrverdampfer nach Anspruch 1, **dadurch gekennzeichnet, daß** die erste wärmeleitende Folie (2) eine Metallfolie, vorzugsweise eine Aluminiumfolie, besonders bevorzugt eine nicht klebende Aluminiumfolie, ist.

3. Rohrverdampfer nach Anspruch 1 oder 2, **dadurch gekennzeichnet, daß** die weitere wärmeleitende Folie (4) eine einseitig oder vorzugsweise eine doppelseitig klebende Metallfolie, insbesondere eine doppelseitig klebende Aluminiumfolie, ist.

4. Rohrverdampfer nach Anspruch 3, **dadurch gekennzeichnet, daß** die doppelseitig klebende Folie (4) auf der äußeren klebenden Oberfläche, die auf der vom Rohr abgewandten Seite liegt, mit einer ablösbaren Schutzschicht, insbesondere einem Abdeckpapier oder einer Schutzfolie, bedeckt ist.

5. Rohrverdampfer nach einem der vorangehenden Ansprüche, **dadurch gekennzeichnet, daß** das Rohr (3) ein mehrfach gebogenes, insbesondere ein schlangenlinienförmig oder mäanderförmig gebogenes Rohr ist.

6. Rohrverdampfer nach einem der vorangehenden Ansprüche, **dadurch gekennzeichnet, daß** das Rohr ein Metallrohr, vorzugsweise ein Aluminiumrohr, ist.

7. Rohrverdampfer nach einem der vorangehenden Ansprüche, **dadurch gekennzeichnet, daß** das Rohr in der Weise deformiert ist, daß der Rohrquerschnitt von der Kreisform abweicht und vorzugsweise die Form einer Ellipse oder eines Halbkreises hat.

8. Rohrverdampfer nach einem der vorangehenden Ansprüche, **dadurch gekennzeichnet, daß** er eine Anordnung von zwei oder mehreren, in derselben Ebene liegenden Rohren (3) aufweist.

9. Rohrverdampfer nach einem der vorangehenden Ansprüche, **dadurch gekennzeichnet, daß** er als gebogenes oder abgewinkeltes, plattenförmiges Bauelement gestaltet ist.

10. Verfahren zur Herstellung eines zum Einbau in Kühlgeräte geeigneten Rohrverdampfers (6), umfassend folgende Schritte:
- Herstellung oder Bereitstellung einer Negativ-Form (1), deren Oberfläche eine Kontur (5) oder Konturen aufweist, die der Kontur des Rohres (3) des herzustellenden Verdampfers entspricht/entsprechen;
- Bedecken der genannten Oberfläche der Negativ-Form (1) mit einer ersten wärmeleitenden Folie (2);
- Auflegen eines Rohres (3) auf die Folie (2), wobei die Konturen des Rohres an den Konturen der Negativ-Form (1) ausgerichtet werden;
- Einpressen des Rohres (3) in die Kontur der Negativ-Form (1), wobei die Folie (2) tiefgezogen wird;
- Aufkaschieren einer weiteren wärmeleitenden Folie (4), wobei diese Folie klebend mit der genannten ersten Folie (2) verbunden wird;
- Entnahme des so erhaltenen Rohrverdampfers (6) aus der Negativ-Form (1).

11. Verfahren nach Anspruch 10, **dadurch gekennzeichnet, daß** als Rohr (3) ein mehrfach gebogenes Rohr, insbesondere ein schlangenlinienförmig oder mäanderförmig gebogenes Rohr verwendet wird.

12. Verfahren nach Anspruch 10 oder 11, **dadurch gekennzeichnet, daß** ein Metallrohr, vorzugsweise ein Aluminiumrohr, verwendet wird.

13. Verfahren nach einem der Ansprüche 10 bis 12, **dadurch gekennzeichnet, daß** als erste wärmeleitende Folie (2) eine Aluminiumfolie, vorzugsweise ein nicht klebende Aluminiumfolie, verwendet wird.

14. Verfahren nach einem der Ansprüche 10 bis 13, **dadurch gekennzeichnet, daß** die genannte erste Folie (2) vor dem Auflegen des Rohres (3) auf der Oberfläche der Negativ-Form (1) fixiert wird, vorzugsweise durch Ansaugen mittels Vakuum.

15. Verfahren nach einem der Ansprüche 10 bis 14, **dadurch gekennzeichnet, daß** das genannte Rohr (3) vor dem Einpressen über der ersten Folie (2) und der darunter liegenden Negativ-Form (1) fixiert wird.

16. Verfahren nach einem der Ansprüche 10 bis 15, **dadurch gekennzeichnet, daß** das Einpressen des Rohres (3) mittels einer Flächenpresse (7) oder einer Rollenpresse durchgeführt wird.

17. Verfahren nach einem der Ansprüche 10 bis 16, **dadurch gekennzeichnet, daß** der Rohrquerschnitt beim Einpressen deformiert wird, bevorzugt in der Weise, daß der Rohrquerschnitt die Form einer Ellipse oder eines Halbkreises erhält.

18. Verfahren nach einem der Ansprüche 10 bis 17, **dadurch gekennzeichnet, daß** als genannte weitere wärmeleitende Folie (4) eine klebend beschichtete Aluminiumfolie, vorzugsweise eine doppelseitig klebende Aluminiumfolie, verwendet wird.

19. Verfahren nach einem der Ansprüche 10 bis 18, **dadurch gekennzeichnet, daß** sämtliche der genannten Arbeitsschritte maschinell durchgeführt werden, vorzugsweise in einem automatisierten Ablauf.

20. Vorrichtung zur Durchführung einer Herstellungsverfahrens nach einem der Ansprüche 10 bis 19, welche
- eine Aufnahme aufweist, in der eine genannte Negativ-Form (1) vorübergehend befestigt werden kann oder dauerhaft befestigt ist;
- Mittel zum Zuführen der genannten ersten Folie (2) und zum Auflegen dieser Folie auf die genannte Negativ-Form (1), sowie Mittel zum Zuschneiden der Folie (2), aufweist;
- Mittel zum Zuführen eines genannten Rohres (3) und zum Auflegen und Positionieren dieses Rohres auf der genannten ersten Folie (2) und der darunter liegenden Negativ-Form (1) aufweist;
- Mittel zum Einpressen des Rohres (3), vorzugsweise eine Flächen- oder Rollenpresse (7), aufweist;
- Mittel zum Zuführen, Aufkaschieren und Durchtrennen der genannten weiteren wärmeleitenden Folie (4) aufweist.

21. Vorrichtung nach Anspruch 20, **dadurch gekennzeichnet, daß** sie Mittel zum Fixieren der genannten ersten Folie (2) auf der Negativ-Form (1) aufweist, insbesondere Vakuum-Saugeinrichtungen.

22. Vorrichtung nach Anspruch 20 oder 21, **dadurch gekennzeichnet, daß** sie Mittel zum Fixieren des genannten Rohrs (3) aufweist.

23. Vorrichtung nach einem der Ansprüche 20 bis 22, **dadurch gekennzeichnet, daß** ihr eine Steuerungs- oder Regelungseinheit zugeordnet ist, die einen automatischen Ablauf der Herstellungsschritte bewirkt.
